# EUROPÄISCHE PATENTSCHRIFT

(11) **EP 1 475 325 B1**
(45) Veröffentlichungstag und Bekanntmachung des Hinweises auf die Patenterteilung: **03.05.2006**
(21) Anmeldenummer: 03020571.0
(22) Anmeldetag: 18.09.2003
(51) Int. Cl.: B65G 65/46

(54) **Vorrichtung zum dosierten Zuteilen von fliessfähigen Materialkomponenten**
Device for dosing bulk material components
Dispositif pour le dosage des composants de matières en vrac

(30) Priorität: 09.05.2003 DE 10320763
(43) Veröffentlichungstag der Anmeldung: 10.11.2004
(73) Patentinhaber: AZO Verwaltungs-GmbH, 74706 Osterburken (DE)
(72) Erfinder: Link, Otmar, 74722 Buchen-Götzingen (DE); Altrichter, Franz, 74238 Krautheim (DE)
(74) Vertreter: Lichti, Heiner

(56) Entgegenhaltungen:
- EP-A- 0 287 708
- DE-A- 4 119 354
- US-A- 3 280 996
- US-B1- 6 420 665

## Beschreibung

Die Erfindung betrifft eine Vorrichtung zum dosierten Zuteilen fließfähiger Materialkomponenten mit die Materialkomponenten aufnehmenden Vorratsbehältern mit einem Auslauf und wenigstens einer Entnahmeeinrichtung mit einem Einlauf, wobei die Materialkomponenten mittels einer Schnecke mit steuerbarem Antrieb chargenweise dem Vorratsbehälter entnehmbar sind, die Entnahmeeinrichtung und der Vorratsbehälter relativ zueinander bewegbar sind und der Einlauf der Entnahmeeinrichtung an den Auslauf des Vorratsbehälters andockbar ist.

Bei fließfähigen Materialkomponenten, wie pulver- oder granulatförmigem Schüttgut, die in Vorratsbehältern bereitgestellt werden, besteht der Bedarf nach einem dosierten Zuteilen der Komponenten, um sie ihrer bestimmungsgemäßen Verwendung zuzuführen, insbesondere wenn Materialkomponenten entsprechend einer vorgegebenen Rezeptur dosiert einem Mischer, einer Verarbeitungsmaschine, z.B. einem Extruder, einer Spritzgießmaschine, einer Tablettiermaschine, einer Verpackungsmaschine, einem Förderer oder dergleichen, zugeführt werden sollen.

Um den Massendurchsatz der abgegebenen Materialkomponenten zu erfassen, sind Vorratsbehälter bekannt, die auslaufseitig mit einer Förderschnecke ausgestattet sind (EP 0 344 521). Die Förderschnecke ist motorisch angetrieben und dem Auslauf des z.B. als Silo ausgebildeten Vorratsbehälters nachgeordnet, so dass die Materialkomponente in der gewünschten Menge aus dem Vorratsbehälter entnommen werden kann. Die Dosierung geschieht volumetrisch über die Umdrehungszahl der Förderschnecke oder gravimetrisch, wobei die Materialkomponente in einen Wiegebehälter überführt und die Förderschnecke stillgesetzt wird, sobald die gewünschte Materialmenge im Wiegebehälter erreicht ist. Derartige Anlagen sind jedoch aufgrund des Schneckenantriebs an jedem Vorratsbehälter aufwendig und teuer und insbesondere bei verhältnismäßig kleinvolumigen Behältern, z.B. für die Zuteilung von Chemikalien, Farbstoffen, pharmazeutischen Wirkstoffen etc. wenig wirtschaftlich.

Ferner sind Entnahmeeinrichtungen mit steuerbar angetriebenen Förderschnecken bekannt (DE 199 41 920), denen die zu dosierenden Materialkomponenten z.B. über einen Aufgabetrichter aufgegeben werden. Die Dosierung geschieht wiederum volumetrisch über die Umdrehungszahl der Schnecke, oder gravimetrisch, indem die Materialkomponente mittels der Schnecke in einen Wiegebehälter überführt wird. Nachteilig ist einerseits, dass nach der Dosierung einer Materialkomponente das im Schneckenförderer zurückbleibende Material verworfen werden muss, andererseits kommt es beim Einsatz einer solchen Entnahmeeinrichtung zum dosierten Zuteilen verschiedener Materialkomponenten zu unerwünschten Querkontaminationen im Schneckenförderer.

Diese Nachteile werden nach einem älteren, nicht vorveröffentlichten Vorschlag der Anmelderin (DE 102 20 792, EP 03006459) dadurch vermieden, dass die Schnecke im Bereich des Auslaufs und innerhalb des Vorratsbehälters antriebslos aber drehbar angeordnet ist und ein auslaufseitiges Kupplungsmittel aufweist, und dass im Bereich des Einlaufs der Entnahmeeinrichtung ein steuerbarer Antrieb angeordnet ist, dessen Antriebswelle ein endständiges, mit dem Kupplungsmittel der Schnecke drehfest verbindbares Kupplungsmittel aufweist, wobei das Kupplungsmittel der Schnecke zugleich einen den Auslauf des Vorratsbehälters abdichtendes Verschlussstück aufweist.

Diese Ausbildung ermöglicht eine genaue Dosierung der dem jeweiligen Vorratsbehälter zu entnehmenden Materialkomponente, indem die Entnahmeeinrichtung mit ihrem Einlauf an den Auslauf des Vorratsbehälters angedockt und das Kupplungsmittel der Antriebswelle der Entnahmeeinrichtung mit dem Kupplungsmittel der im Bereich des Auslaufs des Vorratsbehälters antriebslos angeordneten Schnecke verbunden wird. Sodann wird die Schnecke über die Antriebswelle mittels des gesteuerten Antriebs der Entnahmeeinrichtung in Drehung versetzt und die Materialkomponente dadurch aus dem Auslauf des Vorratsbehälters über den Einlauf in die Entnahmeeinrichtung überführt. Sobald die gewünschte Menge der Materialkomponente dem Vorratsbehälter entnommen worden ist, wird die Antriebswelle stillgesetzt, von der Schnecke entkuppelt und die Entnahmeeinrichtung vom Auslauf des Vorratsbehälters abgerückt. Die dosierte Zuteilung kann entsprechend dem Stand der Technik volumetrisch durch Steuerung der Umdrehungszahl der mit der Schnecke verbundenen Antriebswelle oder gravimetrisch durch einen der Entnahmeeinrichtung nachgeschalteten Wiegebehälter geschehen. Da die Schnecke im Auslauf des Vorratsbehälters verbleibt, kann das gesamte entnommene Material unter Vermeidung von Querkontaminationen seinem Verwendungszweck zugeführt werden. Die antriebslose Anordnung der Schnecke im Bereich des Auslaufs jedes Vorratsbehälters ermöglicht eine im Vergleich mit Vorratsbehältern mit einem eigenen nachgeschalteten motorischen Schneckenförderer überaus kostengünstige Herstellung desselben, so dass der Vorratsbehälter z.B. als portabler Einwegbehälter ausgebildet sein kann. Der Vorratsbehälter kann selbstverständlich auch als stationärer oder verfahrbarer Container oder als Silo mit einem an der Behälterunterseite angeordneten Auslauf ausgebildet sein, wobei insbesondere mehrere Vorratsbehälter vorgesehen sind und die Entnahmeeinrichtung zwischen den Ausläufen der Vorratsbehälter verfahrbar sein kann, um die verschiedenen, in den Vorratsbehältern bereitgehaltenen Materialkomponenten in der gewünschten Menge zu entnehmen. Die vorbeschriebene Vorrichtung ist insbesondere zum chargenweise sequentiellen Zuführen von in mehreren Vorratsbehältern bereitgestellteri, verschiedenen Materialkomponenten, z.B. verschiedenartigen oder verschiedenfarbigen Kunststoffgranulaten, Additiven, Farbstoffen, pharmazeutischen Wirkstoffen etc., die einem Mischer oder einer Verarbeitungsmaschine entsprechend einer vorgegebenen Rezeptur aufgegeben werden sollen, geeignet.

Ausgehend von diesem älteren, nicht vorveröffentlichten Vorschlag der Anmelderin liegt der Erfindung die Aufgabe zugrunde, eine funktionssichere Übergabe der Materialkomponenten zu gewährleisten.

Diese Aufgabe wird erfindungsgemäß dadurch gelöst, dass das Verschlussstück für den Auslauf des Vorratsbehälters unter Wirkung einer axialen Federkraft steht, die das Verschlussstück in dichtender Anlage am Auslauf hält, und dass das Kupplungsmittel an der Antriebswelle mit einem integrierten Sauggreifer zum Abheben des Verschlussstücks von dem Auslauf entgegen der Federkraft versehen ist.

Das Verschlussstück wird so lange in dichtender Anlage am Auslauf des Behälters gehalten, wie kein Produkt aus dem Behälter entnommen wird. Damit ist ein sicherer Verschluss beim Befüllen und Transportieren des Behälters gewährleistet und kann nach einem Dosiervorgang kein Produkt aus dem Auslauf nachrieseln.

Zum dosierten Entnehmen des Produktes ist das Kupplungsmittel an der Antriebswelle mit einem integrierten Sauggreifer versehen, mittels dessen das Verschlussstück von dem Auslauf entgegen der Federkraft abgehoben werden kann. Kommen also die Kupplungsmittel an der Antriebswelle einerseits und an der Schnecke andererseits in Wirklage, wird zugleich auch der Sauggreifer wirksam und das Verschlussstück entgegen der Federkraft vom Auslauf abgehoben, wobei die Wirklage der Kupplungsmittel zugleich für den Antrieb der Schnecke im Behälter sorgt, die so lange in Umlauf gehalten wird, bis die gewünschte Dosiermenge ausgebracht ist. Anschließend wird der Unterdruck am Sauggreifer abgebaut, so dass das Verschlussstück durch die axiale Federkraft wieder in seine Dichtlage am Auslauf gelangt.

Gemäß einer Ausführungsform weist die Schnecke eine Hohlwelle auf, in der eine die Federkraft bildende Zugfeder angeordnet ist, die auf das Verschlussstück wirkt. Die Zugfeder zieht das Verschlussstück stets in dichtende Anlage am Auslauf, und zwar unabhängig von der Drehlage der Schnecke und des mit ihr verbundenen Kupplungsmittels.

Gemäß einer weiteren Ausführungsform ist vorgesehen, dass der Antrieb eine Antriebswelle mit einem axialen Kanal aufweist, der an dem Kupplungsmittel unter Bildung des Sauggreifers mündet und an dem gegenüberliegenden Ende an eine Saugdüse angeschlossen ist. Sobald die Kupplungsmittel in Eingriff kommen und der Sauggreifer unter Vakuum gesetzt wird, kann das der Dosierschnecke zugeordnete Kupplungsmittel zusammen mit dem Verschlussstück unter Vorspannen der Zugfeder vom Auslauf abgehoben und bei Umlauf der Antriebswelle und der mitgenommenen Schnecke im Vorratsbehälter der Dosiervorgang durchgeführt werden.

Mit Vorteil weisen die beiden Kupplungsmittel auf den einander zugekehrten Seiten mindestens zwei Kupplungsstifte und damit korrespondierende Bohrungen auf, wobei eine drehfeste Verbindung durch Eingreifen der Kupplungsstifte in die Bohrungen hergestellt wird.

Vorzugsweise sind das Kupplungsmittel für die Schnecke und das Verschlussstück als einteiliges scheibenförmiges Bauteil ausgebildet, das mit seiner Rückseite dichtend am Auslauf anliegt und mit seiner vorderen Stirnseite die Bohrungen zur Aufnahme der Stifte an dem antriebsseitigen Kupplungsmittel aufweist.

Mit Vorteil sind der Antrieb zusammen mit der Antriebswelle und die Entnahmeeinrichtung in eine Andockposition verfahrbar, in der der Einlauf der Entnahmeeinrichtung an den Auslauf des Vorratsbehälters angeschlossen ist. Nach dem Andocken wird der Antrieb mit der Antriebswelle bis in die Kupplungslage der Kupplungsmittel verfahren, der Sauggreifer unter Vakuum gesetzt und das Verschlussstück vom Auslauf durch Zurückfahren des Antriebs mit der Antriebswelle in eine Öffnungslage gebracht. Zugleich wird die mit der Antriebswelle gekoppelte Schnecke in Drehung versetzt, um den Dosiervorgang einzuleiten.

Zu diesem Zweck weist die Entnahmeeinrichtung an ihrem Einlauf einen diese umgebenden Andockring auf, der in der Andockposition den Auslauf des Vorratsbehälters umgibt. Dieser Andockring weist vorzugsweise eine konische Innenfläche auf.

In weiterhin vorteilhafter Ausführung ist der Antrieb mit der Antriebswelle mittels eines Pneumatikzylinders zwischen den verschiedenen Betriebsstellungen verfahrbar.

Da dem gravimetrischen Dosieren bei Pulvern und rieselfähigen Schüttgütern die weit größere Bedeutung zukommt als einer volumetrischen Dosierung, ist der Entnahmeeinrichtung eine Behälterwaage-zum gravimetrischen Erfassen der dosierten Materialkomponente nachgeschaltet..Vorzugsweise ist die Behälterwaage entlang mehrerer Vorratsbehälter zum Einsammeln verschiedener Materialkomponenten auf einem Fahrrahmen verfahrbar, wobei auf dem Fahrrahmen die Entnahmeeinrichtung mit dem Antrieb angeordnet ist und zwischen der Entnahmeeinrichtung und der Behälterwaage eine flexible Verbindung zur Entkopplung der Waage von dem Antrieb und der Entnahmeeinrichtung vorgesehen ist. Durch die flexible Verbindung ist sichergestellt, dass sich die Bewegungskräfte des Antriebs für die Dosierschnecke und sonstige Reaktionskräfte nicht auf die Behälterwaage übertragen und das Wiegeergebnis nicht verfälschen können.

Nachstehend ist die Erfindung anhand eines in der Zeichnung wiedergegebenen Ausführungsbeispiels beschrieben. In der Zeichnung zeigen:
- Fig.1: eine schematische Ansicht einer Ausführungsform der Vorrichtung zum gravimetrischen Dosieren mehrerer Materialkomponenten;
- Fig.2: eine vergrößerte Ansicht des Vorratsbehälters gemäß Fig.1 mit einem Teilschnitt im Bereich des Behälterbodens;
- Fig.3: eine Teilansicht im Schnitt im Bereich der Entnahmeeinrichtung vor dem Andocken;
- Fig.4: eine der Fig.3 entsprechende Ansicht der Entnahmeeinrichtung nach dem Andocken;
- Fig.5: eine entsprechende Ansicht der Entnahmeeinrichtung vor dem Einleiten des Dosiervorgangs und
- Fig.6: eine entsprechende Ansicht während des Dosiervorgangs.

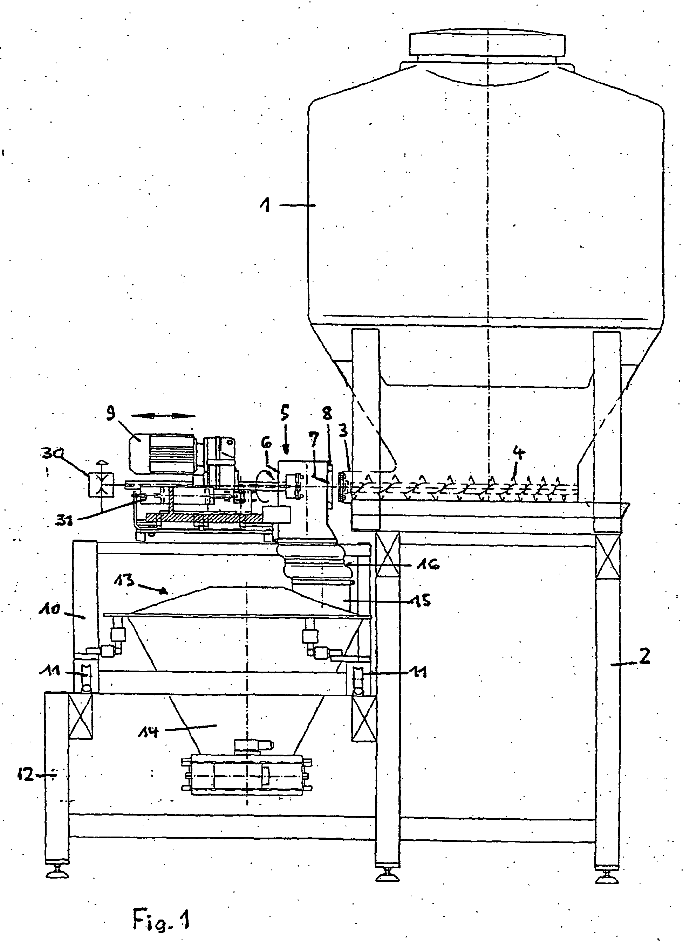

In Fig.1 ist nur ein Vorratsbehälter 1 von einer in Reihe hintereinander angeordneten Vorratsbehältern gezeigt, die - ähnlich wie in einem Regallager - auf einem Gestell 2 angeordnet sind und in gefülltem Zustand mit einem Gabelstapler oder dergleichen in das Regal eingestellt und im leeren Zustand aus dem Regal entnommen werden können. Jeder Behälter 1 ist mit einem Auslaufstutzen 3 versehen, wobei die Auslaufstutzen aller Behälter identisch ausgebildet sind und auf einer Höhe liegen. Ferner ist in jedem Behälter 1 im Bereich des Bodens eine Schnecke 4 ohne eigenen Antrieb angeordnet. Entlang der Behälterreihe ist eine Entnahmeeinrichtung 5 verfahrbar, die eine Art Fallschacht 6 mit einem Einlauf 7 und einen diesen umgebenden Andockring 8 aufweist, der mit dem Auslaufstutzen 3 jedes Vorratsbehälters 1 zusammenwirkt.

Der Entnahmeeinrichtung 5 ist ferner ein Antrieb 9, z.B. ein Elektromotor, zugeordnet, der, wie später beschrieben, zum Antrieb der Förderschnecke 4 im Vorratsbehälter 1 dient. Die Entnahmeeinrichtung 5 und der Antrieb 9 sitzen auf einem Fahrrahmen 10, der mittels Laufrollen 11 auf einem dem Gestell 2 verbundenen Grundrahmen 12 verfahrbar ist. In den Fahrrahmen 10 ist beim wiedergegebenen Ausführungsbeispiel eine Behälterwaage 13 eingesetzt, in die die dosierten Komponenten von der Entnahmeeinrichtung 5 abgegeben werden. Um während des Dosiervorgangs keine Kräfte auf den Behälter 14 der Behälterwaage 13 einwirken zu lassen, ist zwischen der Entnahmeeinrichtung 5 und dem Zulaufstutzen 15 des Behälters 14 eine flexible Verbindung 16 vorgesehen.

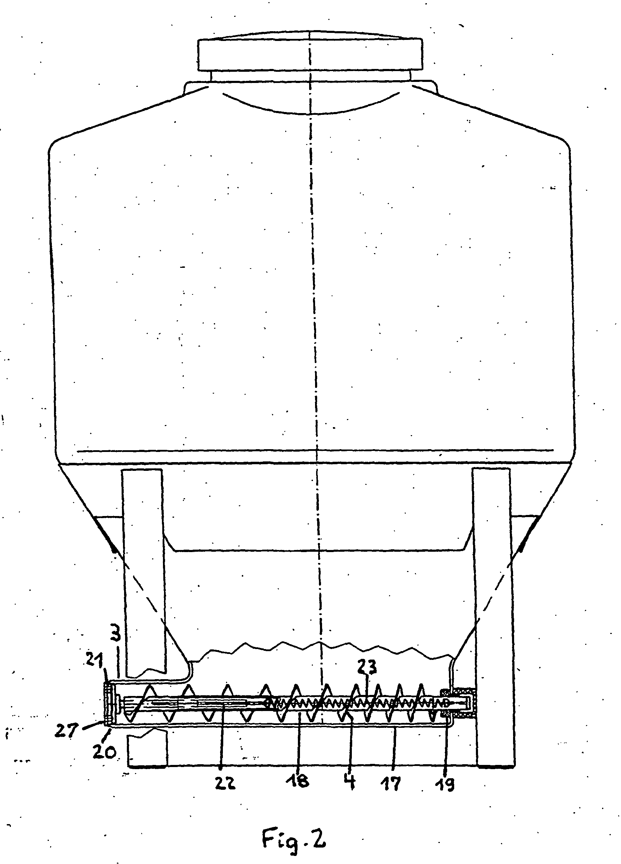

Fig.2 zeigt den Behälter 1 in einer vergrößerten, teilweise geschnittenen Ansicht. Die im Bereich des Bodens 17 des Behälters angeordnete Schnecke 4 weist eine Hohlwelle 18 auf, die an ihrem einen Ende bei 19 in einem Lager sitzt und ihrem gegenüberliegenden freien Ende mittels der Schneckengänge im Auslaufstutzen 3 geführt ist. Die Schnecke 4 ist antriebslos im Behälter angeordnet. Der Auslaufstutzen 3 mündet in einen Auslauf 20 aus, durch den die im Behälter 1 enthaltene Materialkomponente ausgetragen werden kann. Dieser Auslauf 20 ist mittels eines Verschlussstücks 21 verschlossen, solange Material nicht entnommen wird. Zu diesem Zweck sitzt das Verschlussstück 21 am außenliegenden Ende einer profilierten Welle 22, die mit einem Innenprofil der Hohlwelle 18 zur Übertragung von Drehmomenten zusammenwirkt. Ferner ist die Profilwelle 22 an eine Zugfeder 23 angeschlossen, die innerhalb der Hohlwelle 18 angeordnet ist. Die Zugfeder 23 zieht das Verschlussstück 21 über die Profilwelle 22 dichtend an den Auslauf 20 des Auslaufstutzens 3 an, solange kein Produkt aus dem Vorratsbehälter entnommen wird. Damit wird auch ein Austreten des Produktes beim Transport oder bei Füllen des Behälters 1, wie auch ein Nachrieseln von Produkt durch den Auslauf 20 nach einem Dosiervorgang verhindert.

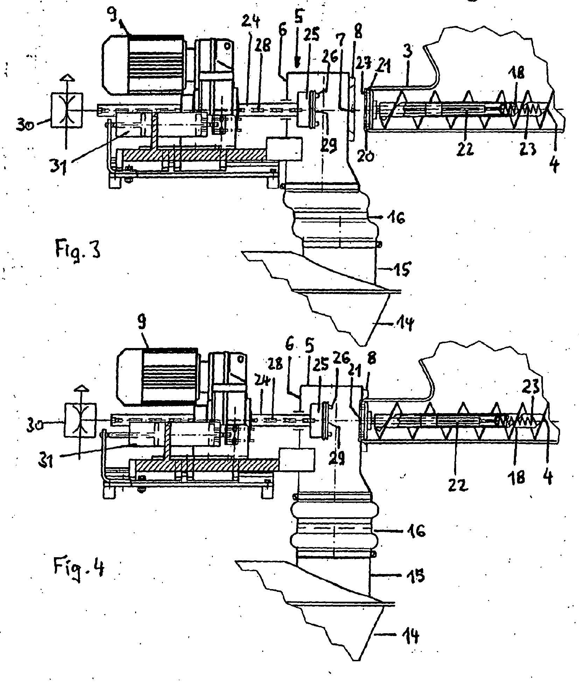

Nachfolgend wird auf die Fig.3 bis 6 eingegangen, die jeweils einen vergrößerten Ausschnitt im Bereich der Übergabe des Produktes zeigen. Der Antrieb 9 treibt eine Welle 24, die in den Fallschacht 6 der Entnahmeeinrichtung 5 hineingreift und dort ein Kupplungsmittel 25 in Form von zwei Kupplungsstiften 26 aufweist, die mit entsprechenden Bohrungen an einem zugleich das Verschlussstück 21 bildenden Kupplungsmittel 27 (Fig.2) in Wirklage gebracht werden können, um über die Profilwelle 22 und die Hohlwelle 18 die Dosierschnecke 4 anzutreiben. Die Antriebswelle 24 weist ferner einen Kanal 28 auf, der unter Bildung eines Sauggreifers 29 an der Stirnseite des Kupplungsmittels 25 endet und an seiner gegenüberliegenden Seite an eine Vakuumdüse 3 angeschlossen ist.

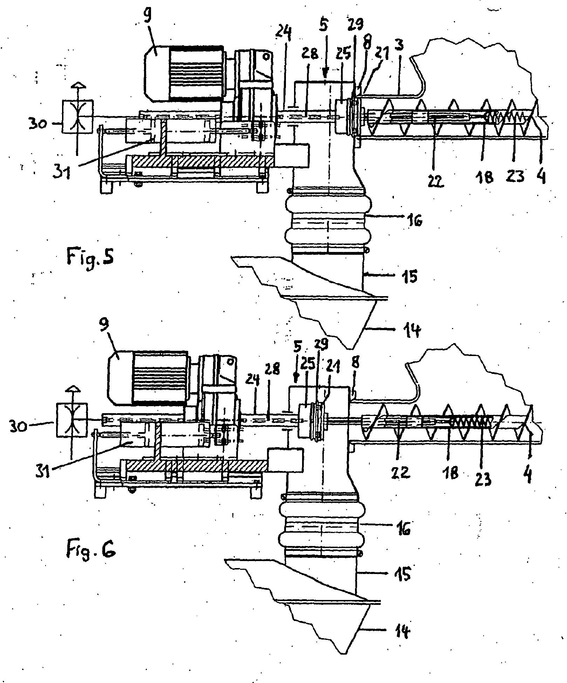

Der Antrieb 9 ist zusammen mit der Antriebswelle 24 in mehrere Positionen verfahrbar, die in den Fig.4 bis 6 gezeigt sind. Nachdem die Entnahmeeinrichtung 5 mit der Behälterwaage 13 in Position vor dem Auslaufstutzen 3 eines Behälters verfahren worden ist (Fig.3), wird die Entnahmeeinrichtung 5 mit dem Fallschacht mittels des Pneumatikzylinders 31 in die Andockposition gemäß Fig.4 verfahren, in der der Andockring 8 den Auslaufstutzen 3 im Bereich des Auslaufs 20 übergreift. Dabei wird zugleich die flexible Verbindung 16 in eine Neutrallage bewegt, in der sie verhindert, dass vertikale und horizontale Kräfte auf den Behälter 14 der Behälterwaage 13 übertragen werden. Anschließend verfährt der Antrieb 9 mit der Antriebswelle 24 das Kupplungsmittel 25 bis zum Eingriff der Kupplungsstifte in die Bohrungen des Verschlussstücks 21, so dass eine Antriebsverbindung zwischen der Antriebswelle 24 und der Profilwelle 22 und über diese mit der Hohlwelle 18 hergestellt ist. Zugleich wird über die Saugdüse 30 der am Kupplungsmittel 25 integrierte Sauggreifer 29 wirksam, der das Verschlussstück 21 vom Auslauf 20 abhebt (Fig.5), so dass bei Zurückfahren des Antriebs 9 in die Ausgangslage der Auslauf 20 freiliegt. Gleichzeitig oder kurz zuvor wird die Antriebswelle 24 in Drehung versetzt, so dass die Schnecke 4 über die Profilwelle 22 und die Hohlwelle 18 in Drehung versetzt und das Produkt aus dem Vorratsbehälter über den Fallschacht 6 die dosierte Menge an den Behälter 14 der Behälterwaage 13 abgegeben wird, bis das Gewicht der Komponente erreicht ist. Anschließend wird die Entnahmeeinrichtung mit den Kupplungsmitteln in umgekehrter Reihenfolge (Fig.5→Fig.4→Fig.3) wieder in die Verfahrposition verbracht, so dass die Entnahmeeinrichtung mit dem Antrieb und der Behälterwaage den nächsten Behälter anfahren kann. In der Position gemäß Fig.5 wird ferner der Kanal 28 in der Antriebswelle 24 belüftet, so dass der Sauggreifer seine Wirkung verliert und die Zugfeder 23 das Verschlussstück 21 dichtend auf dem Auslauf 20 hält und nach Abschluss des Dosiervorgangs kein Produkt nachrieseln kann.

## Patentansprüche

1. Vorrichtung zum dosierten Zuteilen fließfähiger Materialkomponenten mit die Materialkomponente aufnehmenden Vorratsbehältern (1) mit einem Auslauf (3) und wenigstens einer Entnahmeeinrichtung (5) mit einem Einlauf (7), wobei jede Materialkomponente mittels einer Schnecke (4) mit steuerbarem Antrieb (9) in dosierten Chargen dem Vorratsbehälter (1) entnehmbar ist, und die Entnahmeeinrichtung (5) und der Vorratsbehälter (1) relativ zueinander bewegbar sind und der Einlauf (7) der Entnahmeeinrichtung (5) an den Auslauf (20) des Vorratsbehälters (1) andockbar ist, und wobei die Schnecke (4) im Bereich des Auslaufs (20) und innerhalb des Vorratsbehälters (1) antriebslos, aber drehbar angeordnet ist und ein auslaufseitiges Kupplungsmittel (27) aufweist, und im Bereich des Einlaufs (7) der Entnahmeeinrichtung (5) ein steuererbarer Antrieb (9) angeordnet ist, dessen Antriebswelle (24) ein endständiges, mit dem Kupplungsmittel (27) der Schnecke (4) drehfest verbindbares Kupplungsmittel (25) aufweist, wobei das Kupplungsmittel (27) der Schnecke (4) zugleich einen den Auslauf (20) des Vorratsbehälters (1) abdichtendes Verschlussstück (21) aufweist, **dadurch gekennzeichnet, dass** das Verschlussstück (21) für den Auslauf (20) des Vorratsbehälters (1) unter Wirkung einer axialen Federkraft (23) steht, die das Verschlussstück (21) in dichtender Anlage am Auslauf (20) hält, und dass das Kupplungsmittel (25) an der Antriebswelle (24) mit einem integrierten Sauggreifer (29) zum Abheben des Verschlussstücks (21) von dem Auslauf (20) entgegen der Federkraft (23) versehen ist.

2. Vorrichtung nach Anspruch 1, **dadurch gekennzeichnet, dass** die Schnecke (4) eine Hohlwelle (18) aufweist, in der eine die Federkraft bildende Zugfeder (23) angeordnet ist, die auf das Verschlussstück (21) wirkt.

3. Vorrichtung nach Anspruch 1 oder 2, **dadurch gekennzeichnet, dass** der Antrieb (9) eine Antriebswelle (24) mit einem axialen Kanal (28) aufweist, der an dem Kupplungsmittel (25) unter Bildung des Sauggreifers (29) mündet und an dem gegenüberliegenden Ende an eine Saugdüse (30) angeschlossen ist.

4. Vorrichtung nach einem der Ansprüche 1 bis 3, **dadurch gekennzeichnet, dass** die beiden Kupplungsmittel (25, 27) auf den einander zugekehrten Seiten mindestens zwei Kupplungsstifte (26) und damit korrespondierende Bohrungen aufweisen, wobei eine drehfeste Verbindung durch Eingreifen der Kupplungsstifte (26) in die Bohrungen hergestellt wird.

5. Vorrichtung nach einem der Ansprüche 1 bis 4, **dadurch gekennzeichnet, dass** das Kupplungsmittel (27) für die Schnecke (4) und das Verschlussstück (21) als einteiliges scheibenförmiges Bauteil ausgebildet sind.

6. Vorrichtung nach einem der Ansprüche 1 bis 5, **dadurch gekennzeichnet, dass** der Antrieb (9) zusammen mit der Antriebswelle (24) und die Entnahmeeinrichtung (5) in eine Andockposition verfahrbar sind, in der der Einlauf (7) der Entnahmeeinrichtung (5) an den Auslauf (20) des Vorratsbehälters (1) angeschlossen ist.

7. Vorrichtung nach einem der Ansprüche 1 bis 6, **dadurch gekennzeichnet, dass** nach Andocken der Entnahmeeinrichtung (5) der Antrieb (9) mit der Antriebswelle (24) in eine Kupplungsposition verfahrbar ist, in der die beiden Kupplungsmittel (25, 27) in Eingriff kommen.

8. Vorrichtung nach einem der Ansprüche 1' bis 7, **dadurch gekennzeichnet, dass** der Antrieb (9)' mit der Antriebswelle (24) in eine Entnahmeposition verfahrbar ist, in der unter Wirkung des Sauggreifers (29) das Kupplungsmittel (25) mit dem Verschlussstück (21) von dem Auslauf (20) des Vorratsbehälters (1) abgerückt sind.

9. Vorrichtung nach einem der Ansprüche 1 bis 8, **dadurch gekennzeichnet, dass** die Entnahmeeinrichtung (5) an ihrem Einlauf (7) einen diese umgebenden Andockring (8) aufweist, der in der Andockposition den Auslauf (20) des Vorratsbehälters (1) umgibt.

10. Vorrichtung nach einem der Ansprüche 1 bis 9, **dadurch gekennzeichnet, dass** der Antrieb (9) mit der Antriebswelle (24) mittels eines Pneumatikzylinders (31) verfahrbar ist.

11. Vorrichtung nach einem der Ansprüche 1 bis 10, wobei der Entnahmeeinrichtung (5) eine Behälterwaage (13) zum gravimetrischen Erfassen der dosierten Materialkomponenten nachgeschaltet ist, **dadurch gekennzeichnet, dass** die Behälterwaage (13) entlang mehrerer Vorratsbehälter (1) zum Einsammeln verschiedener Materialkomponenten auf einem Fahrrahmen (10), auf dem die Entnahmeeinrichtung (5) mit dem Antrieb (9) angeordnet ist, verfahrbar ist und dass zwischen der Entnahmeeinrichtung (5) und der Behälterwaage (13) eine flexible Verbindung (16) zur Entkopplung der Waage von dem Antrieb (9) und der Entnahmeeinrichtung (5) vorgesehen ist.

## Claims

1. Apparatus for the dosed distribution of flowable material components with storage containers (1) receiving the material components and having an outlet (3) and at least one removal device (5) having an inlet (7), each material component being removable in dosed batches from the storage container (1) by means of a screw (4) with controllable drive (9) and the removal device (5) and storage container (1) are movable relative to one another and the inlet (7) of the removal device (5) can be docked with the outlet (20) of the storage container (1), the screw (4) being positioned in driveless, but rotatable manner in the vicinity of the outlet (20) and within the storage container (1), and has an outlet-side coupling means (27), and in the vicinity of the inlet (7) of the removal device (5) is provided a controllable drive (9), whose drive shaft (24) has a terminal coupling means (25) connectable to rotate with the coupling means (27) of the screw (4), the coupling means (27) of the screw (4) also having a cap (21) sealing the outlet (20) of the storage container (1), **characterized in that** the cap (21) for the outlet (20) of the storage container (1) is under the action of an axial spring tension (23), which keeps the cap (21) in sealing engagement on the outlet (20), and that the coupling means (25) at drive shaft (24) is provided with an integrated suction gripper (29) for raising the cap (21) from the outlet (20) in opposition to the spring tension (23).

2. Apparatus according to claim 1, **characterized in that** the screw (4) has a hollow shaft (18) in which is located a tension spring (23) producing the spring tension and which acts on the cap (21).

3. Apparatus according to claim 1 or 2, **characterized in that** the drive (9) has a drive shaft (24) with an axial duct (28), which issues at the coupling means (25), accompanied by the formation of the suction gripper (20), and is connected at the opposite end to a suction nozzle (30).

4. Apparatus according to one of the claims 1 to 3, **characterized in that** the two coupling means (25, 27) have on the facing sides at least two coupling pins (26) and corresponding holes, a connecting to rotate being brought about by the engagement of the coupling pins (26) in the holes.

5. Apparatus according to one of the claims 1 to 4, **characterized in that** the coupling means (27) for the screw (4) and the cap (21) are constructed as one-piece, disk-shaped components.

6. Apparatus according to one of the claims 1 to 5, **characterized in that** the drive (9) together with the drive shaft (24) and the removal device (5) are displaceable into a docking position in which the inlet (7) of the removal device (5) is connected to the outlet (20) of the storage container (1).

7. Apparatus according to one of the claims 1 to 6, **characterized in that** following the docking of the removal device (5) the drive (9) with the drive shaft (24) is displaceable into the coupling position in which the two coupling means (25, 27) come into engagement.

8. Apparatus according to one of the claims 1 to 7, **characterized in that** the drive (9) with the drive shaft (24) is displaceable into a removal position in which, under the action of the suction gripper (29), the coupling means (25) with the cap (21) are moved away from the outlet (20) of storage container (1).

9. Apparatus according to one of the claims 1 to 8, **characterized in that** at its inlet (7) the removal device (5) has a docking ring (8) surrounding the same and which in the docking position passes round the outlet (29) of storage container (1).

10. Apparatus according to one of the claims 1 to 9, **characterized in that** the drive (9) with the drive shaft (24) is displaceable by means of a pneumatic cylinder (31).

11. Apparatus according to one of the claims 1 to 10, in which a container balance (13) for the gravimetric determination of the dosed material components follows the removal device (5), **characterized in that** the container balance (13) for collecting different material components is displaceable along several storage containers (1) on a travelling frame (10) on which is positioned the removal device (5) with drive (9) and that between the removal device (5) and the container balance (13) is provided a flexible connection (16) for uncoupling the balance from the drive (9) and the removal device (5).

## Revendications

1. Dispositif de distribution dosée de composants de matière fluides comprenant des réservoirs (1) contenant les composants de matière présentant une sortie (3) et au moins un dispositif de prélèvement (5) présentant une entrée (7), dans lequel chaque composant de matière peut être soutiré du réservoir (1) en charges dosées au moyen d'une vis sans fin (4) à entraînement (9) réglable, le dispositif de prélèvement (5) et le réservoir (1) sont mobiles l'un par rapport à l'autre, et l'entrée (7) du dispositif de prélèvement (5) peut être raccordée à la sortie (20) du réservoir (1), et dans lequel la vis sans fin (4) est disposée sans entraînement mais rotative dans la zone de la sortie (20) et à l'intérieur du réservoir (1) et présente un moyen d'accouplement (27), et un entraînement (9) réglable est disposé dans la zone de l'entrée (7) du dispositif de prélèvement (5), dont l'arbre moteur (24) présente un moyen d'accouplement (25) terminal pouvant être relié solidaire en entraînement au moyen d'accouplement (27) de la vis sans fin (4), dans lequel le moyen d'accouplement (27) de la vis sans fin (4) présente simultanément une pièce d'obturation (21) rendant étanche la sortie (20) du réservoir (1), **caractérisé en ce que** la pièce d'obturation (21) pour la sortie (20) du réservoir (1) est soumise à une force élastique (23) axiale, maintenant la pièce d'obturation (21) en contact étanche sur la sortie (20), et **en ce que** le moyen d'accouplement (25) sur l'arbre moteur (24) est muni d'un moyen intégré de maintien par dépression (29) pour dégager la pièce d'obturation (21) de la sortie (20) à l'encontre de la force élastique (23).

2. Dispositif selon la revendication 1, **caractérisé en ce que** la vis sans fin (4) présente un arbre creux (18) dans lequel est disposé un ressort de traction (23) constituant la force élastique agissant sur la pièce d'obturation (21).

3. Dispositif selon la revendication 1, **caractérisé en ce que** l'entraînement (9) présente un arbre moteur (24) à canal axial (28), débouchant au niveau du moyen d'accouplement (25) en formant le moyen de maintien par dépression (29) et relié à l'extrémité opposée à un tube à effet Venturi (30).

4. Dispositif selon l'une quelconque des revendications 1 à 3, **caractérisé en ce que** les deux moyens d'accouplement (25, 27) présentent sur les faces en regard au moins deux goujons d'accouplement (26) et les perçages correspondants, une liaison à assemblage rigide étant réalisée par la mise en prise des goujons d'accouplement (26) dans les perçages.

5. Dispositif selon l'une quelconque des revendications 1 à 4, **caractérisé en ce que** le moyen d'accouplement (27) pour la vis sans fin (4) et la pièce d'obturation (21) est conformé en élément composant d'une seule pièce en forme de disque.

6. Dispositif selon l'une quelconque des revendications 1 à 5, **caractérisé en ce que** l'entraînement (9) ensemble avec l'arbre moteur (24) et le dispositif de prélèvement (5) peuvent être amenés dans une position de raccordement, dans laquelle l'entrée (7) du dispositif de prélèvement (5) est raccordée à la sortie (20) du réservoir (1).

7. Dispositif selon l'une quelconque des revendications 1 à 6, **caractérisé en ce qu'**après le raccordement du dispositif de prélèvement (5), on peut amener l'entraînement (9) avec l'arbre moteur (24) dans une position d'accouplement, dans laquelle les deux moyens d'accouplement (25, 27) viennent en prise.

8. Dispositif selon l'une quelconque des revendications 1 à 7, **caractérisé en ce que** l'entraînement (9) avec l'arbre moteur (24) peut être amené dans une position de prélèvement, dans laquelle, sous l'effet du moyen de maintien par dépression (29), le moyen d'accouplement (25) et sa pièce d'obturation (21) sont retirés de la sortie (20) du réservoir (1).

9. Dispositif selon l'une quelconque des revendications 1 à 8, **caractérisé en ce que** le dispositif de prélèvement (5) présente à son entrée (7) un joint annulaire de raccordement (8) qui, dans la position de raccordement, entoure la sortie (20) du réservoir (1).

10. Dispositif selon l'une quelconque des revendications 1 à 9, **caractérisé en ce que** l'entraînement (9) peut être déplacé avec l'arbre moteur (24) au moyen d'un vérin pneumatique (31).

11. Dispositif selon l'une quelconque des revendications 1 à 10, dans lequel on monte an aval du dispositif de prélèvement (5) une balance de réservoir (13) pour la détermination gravimétrique des composants de matière dosés, **caractérisé en ce que** la balance de réservoir (13) peut être déplacée le long de plusieurs réservoirs (1) pour la collecte de différents composants de matière sur un cadre de déplacement (10) sur lequel le dispositif de prélèvement (5) est disposé avec l'entraînement (9), et **en ce qu'**est prévue entre le dispositif de prélèvement (5) et la balance de réservoir (13) une liaison flexible (16) pour désaccoupler la balance de l'entraînement (9) et du dispositif de prélèvement (5).
